# FASCICULE DE BREVET EUROPEEN

(11) **EP 0 944 325 B1**
(45) Date de publication et mention de la délivrance du brevet: **13.03.2002**
(21) Numéro de dépôt: 97952925.2
(22) Date de dépôt: 03.12.1997
(51) Int. Cl.: A21D 13/08, A21D 13/00, A21D 8/02

(54) **PLAT CUISINE**
FERTIGGERICHT
COOKED DISH

(30) Priorité: 12.12.1996 EP 96203523
(43) Date de publication de la demande: 29.09.1999
(73) Titulaire: SOCIETE DES PRODUITS NESTLE S.A., 1800 Vevey (CH)
(72) Inventeur: HARLAUX, Ginette, F-60000 Beauvais (FR); PENET, Sylvie, F-60430 Warluis (FR); SUNDERLAND, Charles-Austin, F-60000 Goincourt (FR)
(74) Mandataire: Wavre, Claude-Alain
(86) Numéro de dépôt international: EP9706954
(87) Numéro de publication internationale: WO9825475

(56) Documents cités:
- FR-A- 2 668 334
- FR-A- 2 707 839
- US-A- 5 215 774

## Description

La présente invention à pour objet un procédé de préparation d'un plat cuisiné.

Il est connu que, traditionnellement la préparation d'un plat cuisiné à base d'une pâte, notamment des tartes ou des pizzas, comprend une étape de pétrissage de la pâte et une étape de laminage ou de fonçage de la pâte, avant qu'une garniture sucrée ou salée ne soit disposée sur la bande ou sur le fond de pâte. Le plat cuisiné ainsi réalisé est ensuite cuit au four conventionnel.

Par ailleurs, FR 2606974 décrit un procédé de fabrication d'un plat cuisiné type pizza, dans lequel 75 g de farine de blé, 25 g de farine de mais et une pincée de sel et de poivre sont mélangés avec 20 cl d'eau, de manière à obtenir une pâte homogène. Cette pâte homogène est déposée sur une plaque et répartie de façon uniforme, de manière à réaliser une galette sur laquelle une garniture type pizza saupoudrée de gruyère ou d'émmenthal est déposée.

La présente invention a pour but de proposer un procédé de préparation d'un plat cuisiné simple et rapide.

A cet effet, dans le procédé ce préparation selon la présente invention, on mélange 65-75 % d'eau, 20-30 % d'huile végétale et 1-8 % d'oeufs entiers, de manière à obtenir une composition liquide, on ajoute à 50-60 parties en poids de cette composition, 35-45 parties en poids de farine, 5-10 parties en poids de protéines acides, 0,1-1 parties en poids de sel ou de sucre et 0,1-1,5 parties en poids d'un agent levant, de manière à obtenir une pâte liquide homogène, on verse cette pâte dans un moule, on ajoute au centre de la pâte une garniture et l'on cuit le tout.

On a constaté avec surprise que le procédé de préparation d'un plat cuisiné selon l'invention permet de réaliser, dans des conditions de mise en oeuvre simples et rapides, un plat cuisiné à la pâte aérée et légère et présentant une garniture répartie de façon uniforme sur la pâte. Enfin, le plat cuisiné obtenu par la mise en oeuvre du procédé selon la présente invention peut être conservé à basses températures et peut, notamment, être réchauffé aux micro-ondes, tout en gardant une pâte à la texture agréable bien aérée et légère.

Dans la suite de la description, on emploiera l'expression "plat cuisiné" pour désigner notamment des tartes, des pizzas ou des quiches.

On mélange donc, dans une turbine, 65-75 % d'eau, 20-30 % d'huile végétale et 1-8 % d'oeufs entiers, de manière à obtenir une composition liquide. On peut effectuer ce mélange à température ambiante dans une turbine, par exemple.

L'huile végétale peut être de l'huile de maïs, de l'huile de palme ou de l'huile de tournesol, par exemple.

On ajoute ensuite, à 50-60 parties en poids de cette composition, 35-45 parties en poids de farine, 5-10 parties en poids de protéines acides, 0,1-1 parties en poids de sel ou de sucre et 0,1-1,5 parties en poids d'un agent levant, de manière à obtenir une pâte liquide homogène.

La farine est de préférence de la farine de blé tendre, dont la teneur en gluten est de 7-13%, de manière à obtenir une pâte ayant une texture moelleuse.

Les protéines acides sont, de préférence, des protéines laitières. Elles permettent d'obtenir une pâte ayant une bonne cohésion. De plus, ces protéines permettent d'obtenir, après l'étape de cuisson, un plat cuisiné à la pâte moelleuse et à la texture croustillante en surface.

L'agent levant est, de préférence, un agent levant chimique.

On verse donc la pâte homogène dans un moule. On peut notamment la verser dans un moule de façon mécanique, à l'aide d'un système de buses simples.

On ajoute alors au centre de la pâte une garniture. On peut ajouter cette garniture de façon mécanique, à l'aide d'un système de buses multiples, de manière à répartir la garniture uniformément au centre de la pâte, par exemple.

La garniture peut comprendre des morceaux de viande ou de poisson, une sauce, des légumes ou des fruits entiers et/ou en morceaux, du fromage, des épices et/ou des céréales, par exemple.

Si l'on souhaite réaliser un plat cuisiné salé, on peut ajouter au centre de la pâte, des morceaux de viande ou de poisson, une sauce, des légumes entiers et/ou en morceaux, du fromage, des épices et/ou des céréales, par exemple.
La viande peut être du boeuf, du poulet, de la dinde, du veau, du porc ou des produits de charcuterie, comme du jambon, de la saucisse ou du salami, par exemple.
Le poisson peut être du cabillaud, du saumon, de la sole ou du colin, par exemple.
On peut ajouter les morceaux de viande ou de poisson précuits ou à l'état cru, par exemple. On peut également ajouter la viande ou le poisson haché dans la sauce, par exemple.

Les légumes entiers peuvent être des graines de maïs, des petits pois ou des haricots, par exemple. Les légumes en morceaux peuvent être des tomates, des poivrons, des champignons, des pommés de terre, des oignons, du céleri, des carottes ou des broccolis, par exemple.
On peut blanchir ou précuire les légumes entiers et/ou en morceaux avant de les ajouter à la pâte, par exemple. On peut également les ajouter sous forme de purée, par exemple.

Le fromage peut être du gruyère, de la mozzarella, du cheddar ou de l'emmenthal, par exemple.

La sauce peut être de la moutarde, du ketchup, de la sauce tomate ou une sauce blanche, par exemple.

Les céréales peuvent être du riz ou de l'orge perlé que l'on peut précuire ou du sesame ou du pavot, par exemple.

Les épices peuvent être du poivre, du romarin, de la sauge, du gingembre, du thym, du piment ou du cumin, par exemple.

Si l'on souhaite réaliser un plat cuisiné sucré, on peut ajouter au centre de la pâte des fruits entiers et/ou en morceaux, une sauce, des épices et/ou des céréales, par exemple.

Les fruits entiers peuvent être des fraises, des framboises, des myrtilles, des cerises, des groseilles ou des mûres, par exemple. Les fruits en morceaux peuvent être des pommes, des poires, des ananas ou des abricots, par exemple.

La sauce peut être une sauce à la vanille, une sauce au caramel ou une sauce au chocolat, par exemple.

Les épices peuvent être de la cannelle ou de la vanille, par exemple.

Les céréales peuvent être du riz ou de l'orge perlé que l'on peut précuire, par exemple.

Puis on cuit donc le tout, de manière à réaliser un plat cuisiné. On peut réaliser la cuisson dans un four conventionnel à 140-230° C pendant 10-45 min ou dans un cuiseur à bandes à 170-200° C pendant 2-10 min, par exemple.

On peut ensuite conserver le plat cuisiné, sous refrigération ou congélation, à une température de -40° C à +10° C, par exemple.

On réchauffe alors le plat cuisiné selon la présente invention, de préférence, aux micro-ondes pendant 20 s à 10 min, après l'étape de stockage, de manière à obtenir un plat cuisiné prêt à la consommation et présentant une pâte moelleuse, légère et bien aérée à l'intérieur et croustillante en surface.
On peut également le réchauffer dans un four conventionnel à 120-220° C pendant 7 à 30 min, par exemple.
On peut également consommer le plat cuisiné ainsi réalisé sans le réchauffer au préalable, par exemple.

La présente invention a également pour objet le plat cuisiné, obtenu par la mise en oeuvre du présent procédé.

De préférence le plat cuisiné, constitué d'une garniture répartie de façon uniforme sur la pâte, présente une pâte d'une viscosité de 3200-4200 cps et une garniture d'une viscosité de 1300-2100 cps.Les mesures de viscosité sont effectuées à l'aide d'un viscosimètre HAAKE VT 181, commercialisé par la société HERAEUS, Avenue de l'Atlantique, ZA Courtaboeuf B.P. 18, F-91941 Les Ulis Cedex, ayant une vitesse de cisaillement de 35-190 rpm, pour une fréquence de 50 Hz.

Le procédé selon la présente invention est décrit plus en détails dans les exemples non limitatifs ci-après. Dans ces exemples, les pourcentages et parties sont donnés en poids, sauf indications contraires.

### Exemple 1

A l'aide du procédé selon la présente invention, on réalise une quiche.

Pour ce faire, on mélange, dans une turbine, 69 % d'eau, 25,5 % d'huile de tournesol et 5,5 % d'oeufs entiers, de manière à obtenir une composition liquide.

On ajoute alors à 55 parties en poids de cette composition liquide, 37 parties en poids de farine de blé tendre, 6,4 parties en poids de protéines acides, 0,6 partie en poids de sel et 1 partie en poids de poudre levante, de manière à obtenir une pâte liquide homogène.

Parallèlement, on prépare la garniture. On mélange 71 parties en poids d'eau, 14 parties en poids d'oeufs entiers, 2,1 parties en poids d'huile de tournesol, 5,2 parties en poids d'amidon de maïs, 7,1 parties en poids de protéines acides, 0,4 parties en poids d'arôme fromage, 0,1 parties en poids d'extrait arômatique végétal, 0,1 parties en poids d'arôme de jambon.

On verse alors 46 g de la pâte liquide dans un moule à l'aide d'un système de buses simples puis on ajoute au centre de la pâte 54 g de la garniture, à l'aide d'un système de buses multiples.

On cuit alors le tout en four conventionnel à 225° C pendant 18 min, de manière à réaliser une quiche.

Puis, on stocke cette quiche à -40° C.

Le consommateur peut disposer ainsi la quiche sur un plat et la réchauffer aux micro-ondes pendant 4 min, sans que la pâte perde sa texture légère et aérée à l'intérieur et croustillante en surface.
La quiche ainsi réchauffée a l'aspect doré et la texture croustillante en surface, la texture bien aérée à l'intérieur et un goût et un arôme semblables aux quiches traditionnelles.

### Exemple 2

A l'aide du procédé selon la présente invention, on réalise une tarte aux poires.

Pour ce faire, on mélange, dans une turbine, 69,6 % d'eau, 24,9 % d'huile de tournesol et 5,5 % d'oeufs entiers, de manière à obtenir une composition liquide.

On ajoute alors à 56,5 parties en poids de cette composition liquide, 37 parties en poids de farine de blé tendre, 6,3 parties en poids de protéines acides, 0,1 partie en poids de sel et 0,1 partie en poids de poudre levante, de manière à obtenir une pâte liquide homogène.

Parallèlement, on prépare une garniture aux poires. Pour ce faire, on mélange 5,3 g d'huile de tournesol, 0,6 g d'amidon, 3,5 g de sucre, 5,7 g d'oeufs, 2,8 g de jaunes d'oeufs, 8,9 g d'amandes en poudre, 7,5 g d'eau et 25,7 g de poires coupées en cubes.

On verse alors 51 g de la pâte liquide dans un moule à l'aide d'un système de buses simples puis on ajoute au centre de la pâte 60 g de garniture aux poires, à l'aide d'un système de buses multiples.

On cuit alors le tout en four conventionnel à 225° C pendant 18 min, de manière à réaliser une tarte aux poires.

Puis, on stocke cette tarte à -40° C.

Le consommateur peut disposer ainsi la tarte aux poires sur un plat et la réchauffer aux micro-ondes pendant 4 min, sans que la pâte perde sa texture légère et aérée à l'intérieur et croustillante en surface.
La tarte aux poires ainsi réchauffée a l'aspect doré et la texture croustillante en surface, la texture bien aérée à l'intérieur et un goût et un arôme semblables aux tartes aux poires traditionnelles.

## Revendications

1. Procédé de préparation d'un plat cuisiné, dans lequel:
- on mélange 65-75 % d'eau, 20-30 % d'huile végétale et 1-8 % d'oeufs entiers, de manière à obtenir une composition liquide,
- on ajoute à 50-60 parties en poids de cette composition, 35-45 parties en poids de farine, 5-10 parties en poids de protéines acides, 0,1-1 parties en poids de sel ou de sucre et 0,1-1,5 parties en poids d'un agent levant, de manière à obtenir une pâte liquide homogène,
- on verse cette pâte dans un moule,
- on ajoute au centre de la pâte une garniture et
- l'on cuit le tout.

2. Procédé selon la revendication 1, dans lequel on conserve le plat cuisiné à une température de -40° C à +10° C.

3. Procédé selon la revendication 1, dans lequel on réchauffe le plat cuisiné aux micro-ondes, après l'étape de stockage.

4. Procédé selon la revendication 1, dans lequel la garniture comprend des morceaux de viande ou de poisson, une sauce, des légumes ou des fruits entiers et/ou en morceaux, du fromage, des épices et/ou des céréales.

5. Plat cuisiné susceptible d'être obtenu par la mise en oeuvre du procédé selon l'une des revendications 1 à 4.

6. Plat cuisiné selon la revendication 5, constitué d'une garniture répartie de façon uniforme sur la pâte, dont la viscosité de la pâte est de 3,20-4,20 Pa.s et (3200-4200 cps) la viscosité de la garniture est de 1,30-2,10 Pa.s (1300-2100 cps).

## Patentansprüche

1. Verfahren zur Herstellung eines Fertiggerichts, bei dem man
- 65-75% Wasser, 20-30% Pflanzenöl und 1-8% Vollei so mischt, dass man eine flüssige Zusammensetzung erhält,
- 50-60 Gewichtsteilen dieser Zusammensetzung 35-45 Gewichtsteile Mehl, 5-10 Gewichtsteile saure Proteine, 0,1-1 Gewichtsteile Salz oder Zucker und 0,1-1,5 Gewichtsteile Treibmittel so beigibt, dass man einen homogenen flüssigen Teig erhält,
- diesen Teig in eine Form gießt,
- in der Mitte des Teigs einen Belag hinzugibt und
- das Ganze bäckt.

2. Verfahren nach Anspruch 1, bei dem man das Fertiggericht bei einer Temperatur von -40°C bis +10°C lagert.

3. Verfahren nach Anspruch 1, bei dem man das Fertiggericht nach der Lagerung mit Mikrowellen erwärmt.

4. Verfahren nach Anspruch 1, bei dem der Belag Fleisch- oder Fischstücke, Sauce, Gemüse oder Obst, ganz und/oder in Stükken, Käse, Gewürze und/oder Getreide enthält.

5. Fertiggericht, das in dem Verfahren nach einem der Ansprüche 1 bis 4 hergestellt werden kann.

6. Fertiggericht nach Anspruch 5, das aus einem auf dem Teig gleichmäßig verteilten Belag besteht, wobei die Viskosität des Teigs 3,20-4,20 Pa.s (3200-4200 cP) und die Viskosität des Belags 1,30-2,10 Pa.s (1300-2100 cP) beträgt.

## Claims

1. Method for preparing a cooked dish, wherein:
- 65-75 % water, 20-30 % vegetable oil and 1-8 % whole eggs are mixed so as to obtain a liquid composition,
- 35-45 parts by weight of flour, 5-10 parts by weight of acid proteins, 0.1-1 parts by weight of salt or sugar and 0.1-1.5 parts by weight of a raising agent are added to 50-60 parts by weight of this composition so as to obtain a homogeneous liquid paste,
- this paste is poured into a mould,
- a filling is added to the centre of the paste, and
- the whole is cooked.

2. Method according to claim 1, wherein the cooked dish is kept at a temperature of -40°C to +10°C.

3. Method according to claim 1, wherein the cooked dish is reheated by microwaves after the storage step.

4. Method according to claim 1, wherein the filling comprises pieces of meat or fish, a sauce, whole vegetables or fruits and/or pieces thereof, cheese, spices and/or cereals.

5. Cooked dish that can be obtained by implementing the method according to one of claims 1 to 4.

6. Cooked dish according to claim 5, consisting of a filling distributed uniformly over the paste, wherein the viscosity of the paste is 3.20-4.20 Pa.s (3200-4200 cps) and the viscosity of the filling is 1.30-2.10 Pa.s (1300-2100 cps).
